# EUROPEAN PATENT SPECIFICATION

(11) **EP 3 599 060 B1**
(45) Date of publication and mention of the grant of the patent: **15.12.2021**
(21) Application number: 19178461.0
(22) Date of filing: 05.06.2019
(51) Int. Cl.: B25F 5/00, B23Q 11/00

(54) **POWER TOOL AND ACCESSORY SYSTEM**
ELEKTROWERKZEUG UND ZUBEHÖRSYSTEM
SYSTÈME D'OUTIL ÉLECTRIQUE ET D'ACCESSOIRE

(30) Priority: 25.07.2018 GB 201812133
(43) Date of publication of application: 29.01.2020
(73) Proprietor: Black & Decker Inc., New Britain, CT 06053 (US)
(72) Inventor: HEIMRICH, Tim, 65520 Bad Camberg (DE)
(74) Representative: SBD IPAdmin

(56) References cited:
- EP-A1- 3 342 534
- EP-A2- 1 287 948
- EP-A2- 1 331 055
- EP-A2- 2 551 066
- US-A- 5 525 842
- US-A1- 2006 159 536
- US-A1- 2009 080 990
- US-A1- 2011 114 345
- US-A1- 2015 273 638
- US-A1- 2015 316 913
- US-A1- 2016 184 941

## Description

The present invention relates to a power tool and accessory system, and relates particularly, but not exclusively, to a power tool and accessory system comprising induction coils for the wireless transfer of power.

Many types of power tool have mountable accessories which can be used to improve user experience and facilitate use of the power tool. For example, power tools which create dust and debris such as drills, hammer drills and many types of saw may have attachable vacuum dust extractors which draw in dust and debris to reduce the amount of dust and debris deposited around the area being worked on and also to reduce the likelihood of the user inhaling dust. Other types of power tool accessories include lights and lasers for lighting and alignment.

EP1245330 describes a hammer drill having a dust extraction accessory. The dust extraction accessory is mountable to the front of the hammer drill and comprises a vacuum inlet that extends around the bit of the hammer drill to draw in air containing dust produced from the hammer drilling operation. The dust is then filtered and cleaned air exhausted. Power for the fan of the dust extractor is provided by a mechanical coupling between the spindle of the drive motor of the hammer drill and the fan drive shaft. Such a mechanical connection suffers from the drawback that if dust becomes trapped in the mechanical interface, the dust extractor can malfunction.

EP1459842 describes a similar type of hammer drill and dust collection accessory. However, rather than a mechanical drive connection between the drill motor shaft and the suction fan of the dust collector, the dust collector comprises its own motor which is powered by an electrical connection between the dust collector and the hammer drill. This type of system suffers from the drawback that if the electrical connectors are damaged, for example if a terminal is bent out of shape, the dust collector is rendered inoperable.

DE10 2007000826A1 and EP2174749B1 also disclose dust extractors for hammer drills which use the electrical power provided by the power tool to drive the dust extractor drive motors.

EP1331055 comprises all of the features of the pre-characterising portion of claims 1 and 2.

EP2551066 discloses a power tool with a light source powered via an inductive coupling.

EP1287948 discloses a power tool with a light source powered by a self-generating power supply.

US2011114345 discloses a power tool having a safety mechanism. US2015273638 discloses a method for machining a work piece. US2009080990 discloses a machine tool accessory.

EP3342534 discloses a machining device.

US2016184941 discloses a tool holder.

US2006159536 discloses a device for guiding an electrical tool. US2015316913 discloses an interface for a power tool.

US5525842 discloses an air tool with an integrated generator and light ring assembly.

Preferred embodiments of the present invention seeks to overcome the above disadvantages of the prior art.

Accordingly, there is provided a power tool accessory in accordance with claim 1 and a power tool and accessory system according to claim 2.

This provides the advantage of a power tool that does not rely on a physical mechanical or electrical interconnection to power a mountable accessory. By eliminating a physical connection, the likelihood of malfunction is significantly reduced.

Preferred embodiments of the present invention will now be described, by way of example only and not in any limitative sense, with reference to the accompanying drawings in which:
Figure 1 is a perspective view of a power tool and accessory system embodying the present invention;
Figure 2 is a side view of the dust extractor accessory of the system of Figure 1;
Figure 3 is a side view of a power tool of the system of Figure 1; and
Figure 4 is a schematic of the induction coupling of the system of Figure 1.

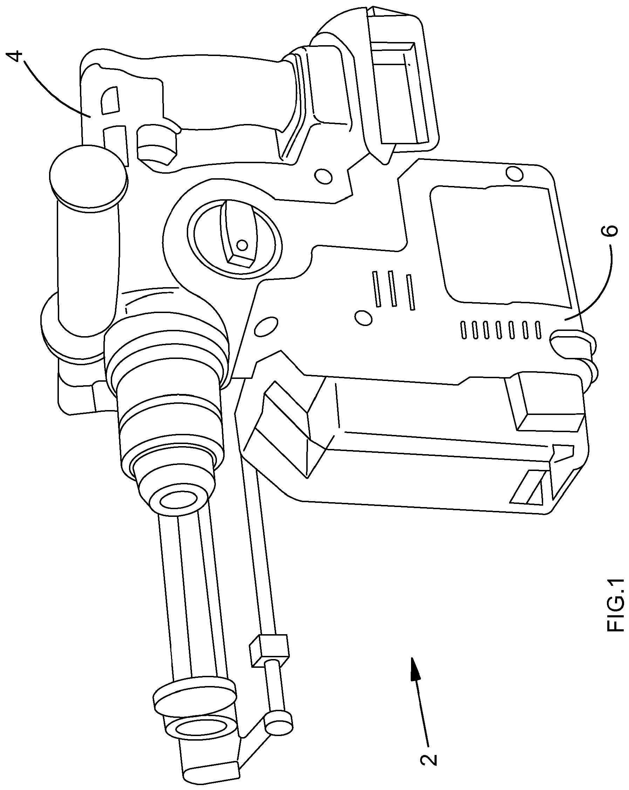

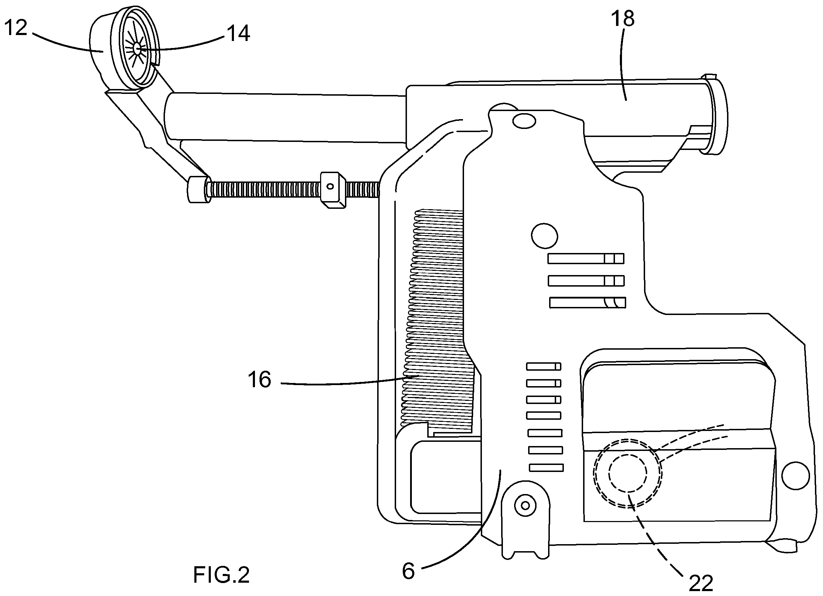

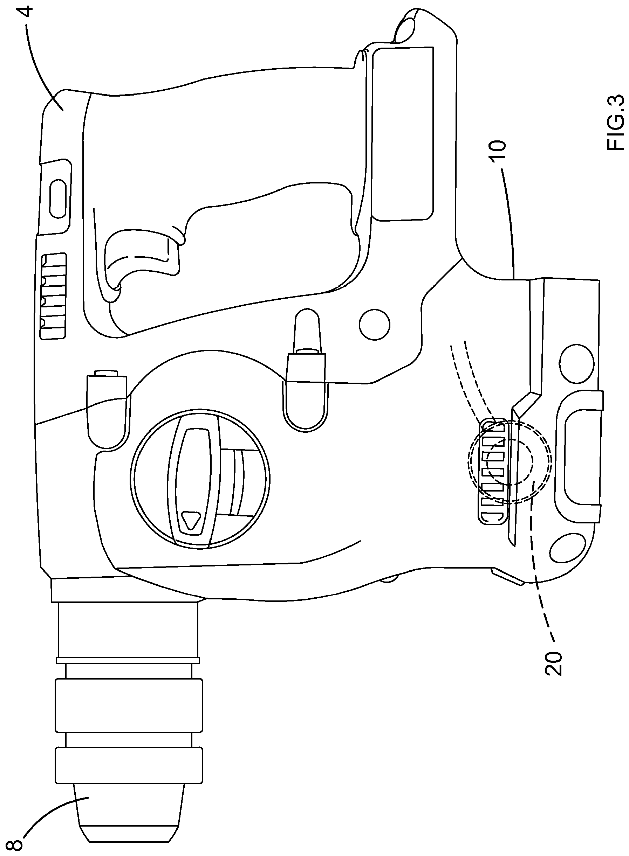

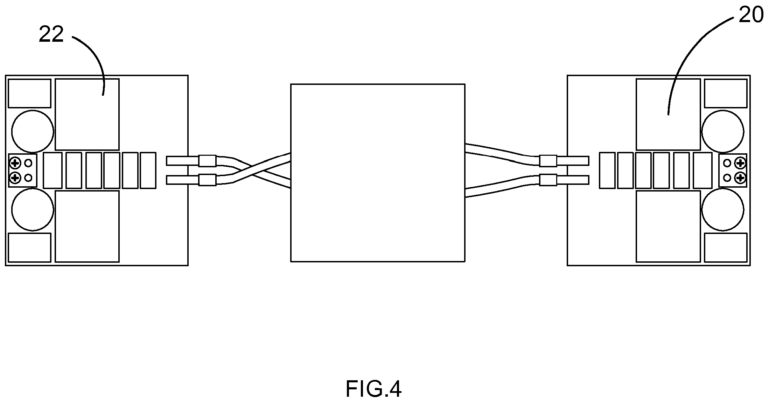

Referring to Figures 1 to 4, a power tool and accessory system 2 comprises a power tool such as hammer drill 4 and an accessory such as dust extractor 6. Hammer drill 4 comprises an electric motor (not shown) to drive a rotary spindle output 8. A source of electrical power such as battery pack 10 is provided, although the hammer drill 4 could also be powered by a corded connection to mains electricity. Hammer drill 4 is able to drive a bit (not shown) in both a reciprocating and rotary manner as will be familiar to persons skilled in the art.

Dust extractor 6 comprises an inlet 12 comprising an aperture 14 through which a bit of hammer drill 4 is arranged to project. Dust extractor 6 also comprises an electric motor (not shown) to drive a fan (not shown) to draw dust laden air into inlet 12. A filter 16 is provided to filter dust from air drawn in through inlet 12. The dust extractor 6 is mountable to hammer drill 4 using a mechanical interface which includes projection 18 which is slideably received in a corresponding slot (not shown) of hammer drill 4. Latching means (not shown) is also provided to releaseably lock the dust extractor 6 to the hammer drill 4.

In order to provide electrical power to the drive motor of the dust extractor 6, a first induction coil 20 is disposed in the hammer drill 4 and is electrically connected to the power supply of the hammer drill. A second induction coil 22 is disposed in the dust extractor 6 at a location in which when the hammer drill 4 and dust extractor 6 are connected as shown in Figure 1, current through the first induction coil 20 induces a voltage in the second induction coil 22 through inductive coupling. As a consequence, the drive motor of the dust collector 6 is powered by inductive power transfer from the electrical power source of the hammer drill 4.

It should be understood that the hammer drill and dust extractor system is only one example of a power tool and accessory system that can use wireless power transfer by inductive coupling between the first and second induction coils 20 and 22. Whilst outside the scope of the present invention, other accessories such as lasers and lights can use such inductive coupling, as well as other power tools such as saws and routers.

## Claims

1. A power tool accessory mountable to a power tool, the power tool accessory comprising:
an accessory output; and
a second induction coil configured to receive electrical power wirelessly transmitted from a first induction coil of a power tool in use to power said accessory output;
**characterised in that** the tool accessory is a dust extractor (6) for a hammer drill which comprises:
1) an inlet (12) comprising an aperture (14) through which a bit of a hammer drill can be arranged to project;
2) an electric motor and a fan wherein the accessory output comprises the electric motor driving the fan to draw dust laden air into the inlet (12); and
3) a filter (16) to filter dust from the air drawn in through the inlet (12);
wherein the second induction coil (22) is disposed in the dust extractor (6) at a location in which, when the dust extractor (6) is connected to a hammer drill, current through a first induction coil (20) induces a voltage in the second induction coil (22) through inductive coupling to drive the electric motor of the dust extractor (6) by inductive power transfer from a source of electrical power (10) for the hammer drill (4).

2. A power tool and accessory system comprising:
a power tool (4) comprising:
a source of electrical power (10);
an electric motor for driving a tool output (8); and
a first induction coil (20) configured to wirelessly transmit electrical power; and
a tool accessory (6) mountable to said power tool (4), the tool accessory comprising (6):
an accessory output; and
a second induction coil (22) configured to receive electrical power wirelessly transmitted from said first induction coil (20) to power said accessory output;
**characterised in that**:
the power tool (4) comprises a hammer drill (4) which drives a bit in both a rotary in both a reciprocating and rotary manner;
wherein the tool accessory is a dust extractor (6) which comprises:
1) an inlet (12) comprising an aperture (14) through which the bit can be arranged to project;
2) an electric motor and a fan wherein the accessory output comprises the electric motor driving the fan to draw dust laden air into the inlet (12); and
3) a filter (16) to filter dust from the air drawn in through the inlet (12);
wherein the first induction coil (20) is disposed in hammer drill (4) and is electrically connected to the source of electrical power (10);
wherein the second induction coil (22) is disposed in the dust extractor (6) at a location in which, when the hammer drill (4) and dust extractor (6) are connected, current through the first induction coil (20) induces a voltage in the second induction coil (22) through inductive coupling to drive the electric motor of the dust extractor (6) by inductive power transfer from the source of electrical power (10) of the hammer drill (4).

## Patentansprüche

1. Elektrowerkzeugzubehör, das an einem Elektrowerkzeug montierbar ist, wobei das Elektrowerkzeugzubehör umfasst:
einen Zubehörausgang; und
eine zweite Induktionsspule, die konfiguriert ist, um elektrische Energie zu empfangen, die drahtlos von einer ersten Induktionsspule eines Elektrowerkzeugs übertragen wird, das zur Energieversorgung des Zubehörausgangs verwendet wird;
**dadurch gekennzeichnet, dass** das Werkzeugzubehör ein Staubabsauger (6) für einen Bohrhammer ist, der umfasst:
1) einen Einlass (12) umfassend eine Öffnung (14), durch die eine Spitze eines Bohrhammers derart angeordnet werden kann, dass sie hervorsteht;
2) einen Elektromotor und einen Lüfter, wobei der Zubehörausgang den Elektromotor umfasst, der den Lüfter antreibt, um staubbeladene Luft in den Einlass (12) zu saugen; und
3) einen Filter (16) zum Filtern von Staub aus der durch den Einlass (12) angesaugten Luft;
wobei die zweite Induktionsspule (22) in dem Staubabsauger (6) an einer Stelle angeordnet ist, an der, wenn der Staubabsauger (6) mit einem Bohrhammer verbunden ist, Strom durch eine erste Induktionsspule (20) eine Spannung in die zweite Induktionsspule (22) durch induktive Kopplung zum Antreiben des Elektromotors des Staubabsaugers (6) durch induktive Leistungsübertragung von einer elektrischen Energiequelle (10) für den Bohrhammer (4) induziert.

2. Elektrowerkzeug und Zubehörsystem, umfassend:
ein Elektrowerkzeug (4), umfassend:
eine elektrische Energiequelle (10);
einen Elektromotor zum Antreiben eines Werkzeugausgangs (8); und
eine erste Induktionsspule (20), die konfiguriert ist, um elektrische Energie drahtlos zu übertragen; und
ein Werkzeugzubehör (6), das an dem Elektrowerkzeug (4) montierbar ist, wobei das Werkzeugzubehör (6) umfasst:
einen Zubehörausgang; und
eine zweite Induktionsspule (22), die konfiguriert ist, um elektrische Energie zu empfangen, die drahtlos von der ersten Induktionsspule (20) übertragen wird, um den Zubehörausgang mit Energie zu versorgen;
**dadurch gekennzeichnet, dass**:
das Elektrowerkzeug (4) einen Bohrhammer (4) umfasst, der eine Spitze sowohl in rotierender als auch in oszillierender Weise antreibt;
wobei das Werkzeugzubehör ein Staubabsauger (6) ist, der umfasst:
1) einen Einlass (12) umfassend eine Öffnung (14), durch die eine Spitze derart angeordnet werden kann, dass sie hervorsteht;
2) einen Elektromotor und einen Lüfter, wobei der Zubehörausgang den Elektromotor umfasst, der den Lüfter antreibt, um staubbeladene Luft in den Einlass (12) zu saugen; und
3) einen Filter (16) zum Filtern von Staub aus der durch den Einlass (12) angesaugten Luft;
wobei die erste Induktionsspule (20) in einem Bohrhammer (4) angeordnet ist und elektrisch mit der elektrischen Energiequelle (10) verbunden ist;
wobei die zweite Induktionsspule (22) in dem Staubabsauger (6) an einer Stelle angeordnet ist, an der, wenn der Bohrhammer (4) und der Staubabsauger (6) verbunden sind, Strom durch die erste Induktionsspule (20) eine Spannung in die zweite Induktionsspule (22) durch induktive Kopplung zum Antreiben des Elektromotors des Staubabsaugers (6) durch induktive Leistungsübertragung von der elektrischen Energiequelle (10) des Bohrhammers (4) induziert.

## Revendications

1. Accessoire d'outil électrique pouvant être monté sur un outil électrique, l'accessoire d'outil électrique comprenant :
une sortie d'accessoire ; et
une seconde bobine d'induction configurée pour recevoir une alimentation électrique sans fil transmise depuis une première bobine d'induction d'un outil électrique en service pour alimenter ladite sortie d'accessoire ;
**caractérisé en ce que** l'accessoire d'outil est un extracteur de poussière (6) pour un marteau perforateur qui comprend :
1) une entrée (12) comprenant une ouverture (14) à travers laquelle un embout d'un marteau perforateur peut être agencé pour faire saillie ;
2) un moteur électrique et un ventilateur dans lequel la sortie d'accessoire comprend le moteur électrique entraînant le ventilateur pour aspirer l'air chargé en poussière dans l'entrée (12) ; et
3) un filtre (16) pour filtrer la poussière depuis l'air aspiré à travers l'entrée (12) ;
dans lequel la seconde bobine d'induction (22) est disposée dans l'extracteur de poussière (6) à un emplacement dans lequel, lorsque l'extracteur de poussière (6) est connecté à un marteau perforateur, un courant à travers une première bobine d'induction (20) induit une tension dans la seconde bobine d'induction (22) par couplage inductif pour entraîner le moteur électrique de l'extracteur de poussière (6) par transfert de puissance inductive depuis une source d'alimentation électrique (10) pour le marteau perforateur (4).

2. Outil électrique et système d'accessoire comprenant :
un outil électrique (4) comprenant :
une source d'alimentation électrique (10) ;
un moteur électrique pour entraîner une sortie d'outil (8) ; et
une première bobine d'induction (20) configurée pour transmettre sans fil une alimentation électrique ; et
un accessoire d'outil (6) pouvant être monté sur ledit outil électrique (4), l'accessoire d'outil comprenant (6) :
une sortie d'accessoire ; et
une seconde bobine d'induction (22) configurée pour recevoir une alimentation électrique sans fil transmise depuis la première bobine d'induction (20) pour alimenter ladite sortie d'accessoire ;
**caractérisés en ce que** :
l'outil électrique (4) comprend un marteau perforateur (4) qui entraîne un embout selon un mouvement de va-et-vient et de rotation ;
dans lesquels l'accessoire d'outil est un extracteur de poussière (6) qui comprend :
1) une entrée (12) comprenant une ouverture (14) à travers laquelle l'embout peut être agencé pour faire saillie ;
2) un moteur électrique et un ventilateur dans lesquels la sortie d'accessoire comprend le moteur électrique entraînant le ventilateur pour aspirer l'air chargé en poussière dans l'entrée (12) ; et
3) un filtre (16) pour filtrer la poussière depuis l'air aspiré à travers l'entrée (12) ;
dans lesquels la première bobine d'induction (20) est disposée dans un marteau perforateur (4) et est connectée électriquement à la source d'alimentation électrique (10) ;
dans lesquels la seconde bobine d'induction (22) est disposée dans l'extracteur de poussière (6) à un emplacement dans lequel, lorsque le marteau perforateur (4) et l'extracteur de poussière (6) sont connectés, un courant à travers la première bobine d'induction (20) induit une tension dans la seconde bobine d'induction (22) par couplage inductif pour entraîner le moteur électrique de l'extracteur de poussière (6) par transfert de puissance inductive depuis la source d'alimentation électrique (10) du marteau perforateur (4).
